# EUROPEAN PATENT SPECIFICATION

(11) **EP 1 395 000 B1**
(45) Date of publication and mention of the grant of the patent: **04.01.2006**
(21) Application number: 02019051.8
(22) Date of filing: 27.08.2002
(51) Int. Cl.: H04L 12/56, H04L 29/08, H04L 29/06

(54) **A method of transmitting data streams dependent on the monitored state of the client application buffer**
Verfahren zur Übertragung von Datenströmen abhängig vom überwachten Zustand des Anwendungsspeichers des Nutzers
Procédé de transmission de donées en continue dépendant de l' état surveillé de la mémoire-tampon de l' application client

(43) Date of publication of application: 03.03.2004
(73) Proprietor: MATSUSHITA ELECTRIC INDUSTRIAL CO., LTD., Kadoma-city, Osaka 571-8501 (JP)
(72) Inventor: Rey, José Luis, 64287 Darmstadt (DE); Burmeister, Carsten, 22081 Hamburg (DE); Hakenberg, Rolf, 64295 Darmstadt (DE)
(74) Representative: Grünecker, Kinkeldey, Stockmair & Schwanhäusser Anwaltssozietät

(56) References cited:
- MIELKE M ET AL: "A multi-level buffering and feedback scheme for distributed multimedia presentation systems" COMPUTER COMMUNICATIONS AND NETWORKS, 1998. PROCEEDINGS. 7TH INTERNATIONAL CONFERENCE ON LAFAYETTE, LA, USA 12-15 OCT. 1998, LOS ALAMITOS, CA, USA,IEEE COMPUT. SOC, US, 12 October 1998 (1998-10-12), pages 219-226, XP010587051 ISBN: 0-8186-9014-3
- CONKLIN G J ET AL: "VIDEO CODING FOR STREAMING MEDIA DELIVERY ON THE INTERNET" IEEE TRANSACTIONS ON CIRCUITS AND SYSTEMS FOR VIDEO TECHNOLOGY, IEEE INC. NEW YORK, US, vol. 11, no. 3, March 2001 (2001-03), pages 269-281, XP001093477 ISSN: 1051-8215
- GRUBER S ET AL: "Protocol considerations for a prefix-caching proxy for multimedia streams" COMPUTER NETWORKS, ELSEVIER SCIENCE PUBLISHERS B.V., AMSTERDAM, NL, vol. 33, no. 1-6, June 2000 (2000-06), pages 657-668, XP004304799 ISSN: 1389-1286
- HUI J Y ET AL: "CLIENT-SERVER SYNCHRONIZATION AND BUFFERING FOR VARIABLE RATE MULTIMEDIA RETRIEVALS" IEEE JOURNAL ON SELECTED AREAS IN COMMUNICATIONS, IEEE INC. NEW YORK, US, vol. 14, no. 1, 1996, pages 226-237, XP000548824 ISSN: 0733-8716

## Description

The present invention relates to a method of transmitting data streams between a sending host and a receiving host using a transport protocol such as TCP.

In network communications between a sending host and a receiving host, the transmission of data packets is mostly done on a best-effort basis. In the communication link, the available bandwidth and the current link conditions vary and hence, the end hosts must be provided with mechanisms to probe and adjust themselves to the current link conditions.

With the development of 3rd generation networks, so-called streaming applications are gaining importance. Streaming applications are understood as a continuous stream of data, e.g. video or audio data which is typically sensitive to time delays. In order that the user will be able to receive multimedia data streams on a portable receiver, for example a mobile phone, several requirements on the transport mechanism will be imposed in order that the delivered data meets with the resulting time constraints. These constraints are difficult to meet in a best-effort environment, which is subject to bandwidth variations and delays.

To cope with the problem of bandwidth adaption, it is common praxis to make several data streams with different encoding rates but same content available at the sending host. According to the available bandwidth, it is then switched between the data streams in order to adjust the rate to the available bandwidth. In other words, multi-rate content streams at the sending host are transmitted and switching operations between streams are performed depending on the available bandwidth.

There are some conventional approaches to TCP streaming that implement a client buffer management, but there are various constraints which are desired to overcome. First of all, the approach to implement a client buffer management should not require modifying the original encoded data or the TCP protocol in any way. Further, the need for additional application messages should not arise, otherwise, the method becomes difficult to implement. Finally, it should be avoided to discard data packets which leads to a loss of data and is therefore not an optimal solution.

In case of multi-media streaming using the TCP protocol, the specific problem lies in achieving a rate match between the bit rate which the TCP flow control mechanism is able to get out of the current transmission link and the rate at which the client application requests data. Assuming that multi-rate content is available at the server, the problem is reduced to how to make a decision to switch this stream and to which stream it should be switched.

In IEEE proceedings 7th international conference on computer communications and networks, US, 12 to 15 October 1998, pages 219 - 226 a multimedia presentation system is disclosed which involves multi-level buffering and a feedback scheme to guarantee on-time retrieval and transmission of multimedia data in presentation environments. In the multi-level buffering scheme, both client and server buffers are designated and collaborated to support end to end multimedia transmission. Local and remote feedback messages are used to dynamically prevent buffer overflow/underflow problems.

"Video Coding for Streaming Media Delivery on the IntemeY', by Conklin G J FT AL, IEEE Transactions on Circuits Systems for Video Technology, IEEE Inc. New York, US, vol. 11, no. 3, March 2001 (2001-03) pages 269-281, XP001 093477 ISSN: 1051-8215, relates to internet streaming media delivery networks for streaming media in a server-client transaction over a transport protocol, such as TCP-and UDP-based network protocol. The document mentions the need for scalable/adaptive streaming involving the idea of having multiple versions of the same content encoded for specific classes of the internet audience. In order to address the possibility of dynamic changes in channel bandwidth and loss statistics the server implements a mechanism where it gets notified that packets are delivered to the clients slower than real-time and skips transmission of some packets in order to prevent the players from rebuffering or losing connections.

In the system described in this document the encoder is used to produce multiple representations (or data streams) of the original content optimized for various conditions. During a streaming session, a client monitors the actual bandwidth and loss characteristic of its connection and instructs the server to switch to the stream whose transmission over the current channel would yield the minimum distortion in the reconstructed signal.

Therefore, the problem underlying the present invention is to provide a method of transmitting data streams between a sending host and a receiving host, wherein said rate match is achieved in a simple manner and which is easy to implement.

This object is solved by a method comprising the steps as set forth in claim 1.

The idea underlying the invention is to monitor the occupancy state of the application layer buffer at the receiving host and to signal stream control data to the sending host depending on the monitored state of the application layer buffer. In this way, a close monitoring of the application layer buffer can be performed.

According to a preferred embodiment, the stream control data commands the sending host to limit or change the encoding rate of the data stream.

According to a further advantageous embodiment of the method, the stream control data signals to the sending host to switch from one data stream to another data stream having the same content but a different encoding rate. Consequently, the buffer monitoring operation triggers the issuing of appropriate requests to switch or to prepare the switch procedure between streams.

Preferably, the step of monitoring the occupancy state of the application layer buffer comprises to compare the bit rate at which the receiving host delivers new data to the application layer buffer with the rate at which data is requested by the application.

According to a further preferred embodiment, the actual occupancy state is compared against a plurality of occupancy thresholds, which is an easily implemented procedure. Upon exceeding or falling below certain buffer occupancy thresholds, appropriate action will be carried out to ensure a seamless stream switch.

The present invention will be more fully understood from the following detailed description with reference to the accompanying drawings which show:
- **Figure 1:**: the basic architecture of a sending host and a receiving host connected by a communications network in which the method subject to the present invention can be performed,
- **Figure 2:**: a block diagram of a server architecture as the sending host in which the method of the present invention is performed,
- **Figure 3:**: a block diagram of a client architecture, and
- **Figure 4:**: a schematic diagram of an application layer buffer illustrating several occupancy states.

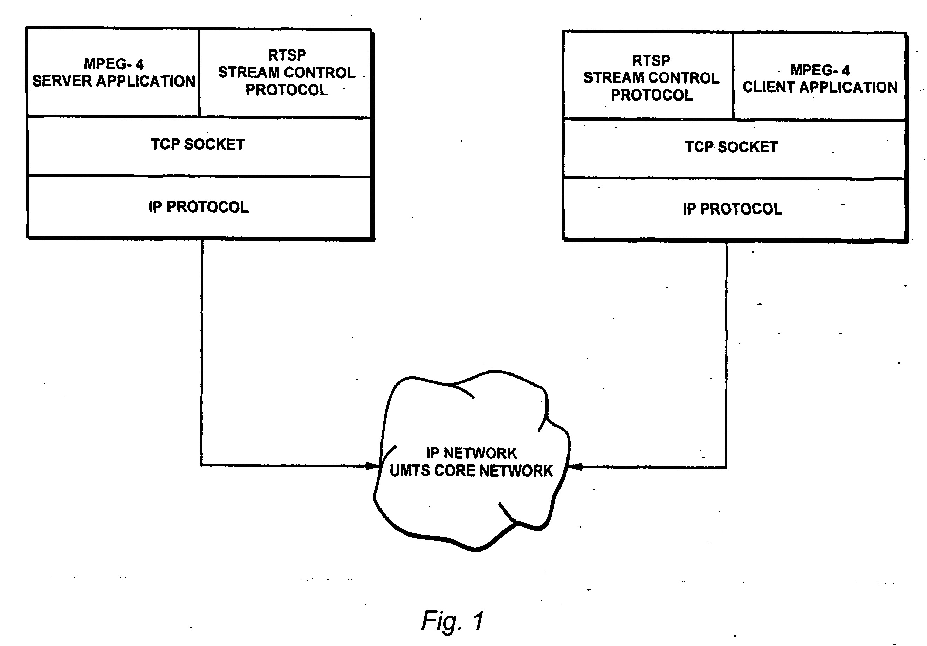

Figure 1 illustrates the basic architecture of a communications network for connecting a video server as a sending host to a video client acting as a receiving host. The communications network is, for example, a UMTS core network, an external network, such as the internet or an internal intranet over which the server and the client communicate by means of a transport protocol. As transport protocol TCP is selected as an example, but it is clear to a skilled person that any other transport protocol for transmitting data can be employed.

In a more general way, it will now be explained how TCP handles the exchange of data between the server and the client.

First of all, the video server needs to transfer its data to the protocol and tell it to send same to the client. To progressively read and send data, the protocol uses a kind of buffer with added functionalities, a so-called TCP socket. Generally, sockets are unequivocally identified by the IP addresses of the correspondents, the protocols and ports which are used. Once a connection between two sockets is established, the communication can be controlled by use of interface calls, which, for example may comprise "create a socket", "bind a socket to a transport address", "accept" or "close a connection", "send", "receive" or "write" data between the sender and the receiver. Wide-spread socket implementations are UNIX BSD 4.2 and Windows Winsock 2.0, where equivalent interface calls are implemented.

Each interface call has parameters, e.g. for the "send" call, parameters of relevance are the socket descriptor, the identifier of the data to be sent and the length of the data stream. Once a data stream is passed in one call, no single bit of this data stream can be modified. The only way to abort transfer of this data stream is to break down the connection.

Nevertheless, in order to close the connection, the application must explicitly issue a "close" call. Interface calls can be queued as, for example, in FTP. When asked for a file, the FTP server usually issues two interface calls for this transmission, namely a "send" call indicating the socket, the identifier of the data stream and the length thereof and a "close" call identifying the socket. The two interface calls are put into the queue and when the "send" call is completed, the connection is irreversibly broken down because the "close" call was next in the queue.

Alternatively, for example, in case of TELNET, the connection is established and the socket is set to wait for incoming data, i.e. commands typed on the keyboard.

Of course, the application can be configured such that the server only issues a send call and waits for the client to close. However, this is uncommon.

Additionally, it is assumed that the TCP protocol provides a means for asynchronously signaling certain information about events in the socket. Often in the specification the information will be an error message. In other cases, there will be information relation to the completion of processing a SEND or RECEIVE or another interface call.

Referring again to Figure 1, the video server provides, e.g. an MPEG 4 compressed data stream, i.e. a given video content, which is made available to the TCP socket in the form of mono-rate or multi-rate streams. Multi-rate streams are defined for the purpose of this and the following description, as one or several data streams with the same video content at different encoding rates. The MPEG data streams are forwarded to the TCP socket. Subsequently, by means of an IP protocol, data is transmitted to the video client. A stream control protocol, e.g. RTSP, should be used to perform such operations as PLAY, PAUSE or STOP the transmission.

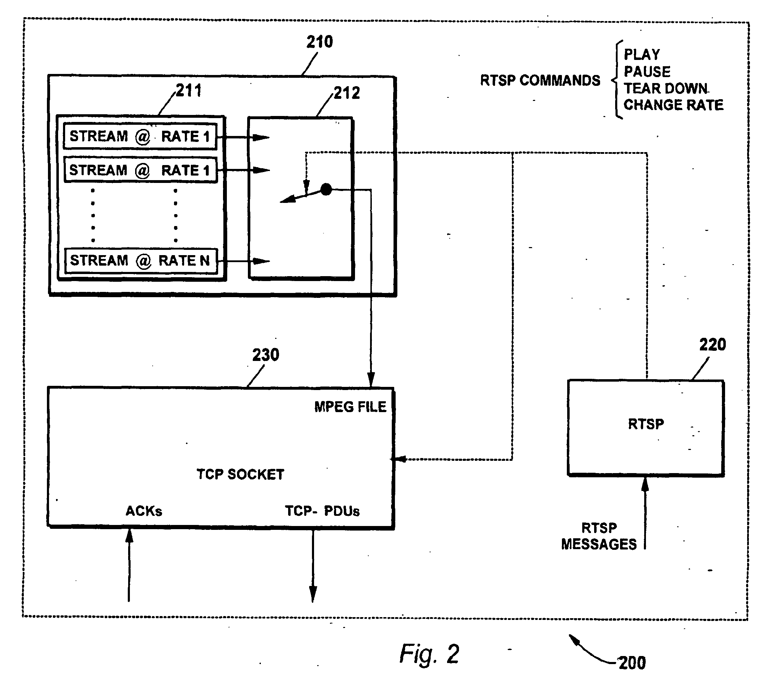

With reference to Figure 2, which shows the basic architecture of a video server 200, at the MPEG server application 210, video content is made available in a buffer 211 at different coding rates. A switch 212, which receives stream control RTSP commands from RTSP block 220, such as "Play", "Pause", "Tear down" or "Change rate", selects one of the data streams which is forwarded to the TCP socket 230 in form of an MPEG file.

It is clear to a skilled person that other stream control protocols than RTSP could be used at the server and the client. The stream control protocol typically instructs to perform play, forwarding, rewinding, pause or stop functions. Additionally, if multi-rate content is available, switch to a higher or lower encoding rate can be instructed.

The server application forwards data segments of variable length to the TCP socket 230. The TCP socket forms packet data units (PDUs) for transmission to the client application.

TCP flow control continuously probes the network for available bandwidth by allowing one additional packet to be in flight every roundtrip time (RTT). Packets in flight are those which are sent without waiting for the respective acknowledgement. This continuous probing for bandwidth is unaware that the delivered bit rate of the TCP protocol might be too high for the receiving client application, i.e. available link bandwidth is 128 Kbps while the stream of data is 64 Kbps encoded video data. In this case, the application layer buffer would overflow and packet losses would take place. Similarly, the available bandwidth of the communication link might not be enough to transmit the data with the encoding rate that the client application would prefer. When such mismatches occur, packet losses take place. As a result, congestion control is invoked and the TCP throughput reduced. With the present invention, these rate mismatches are avoided.

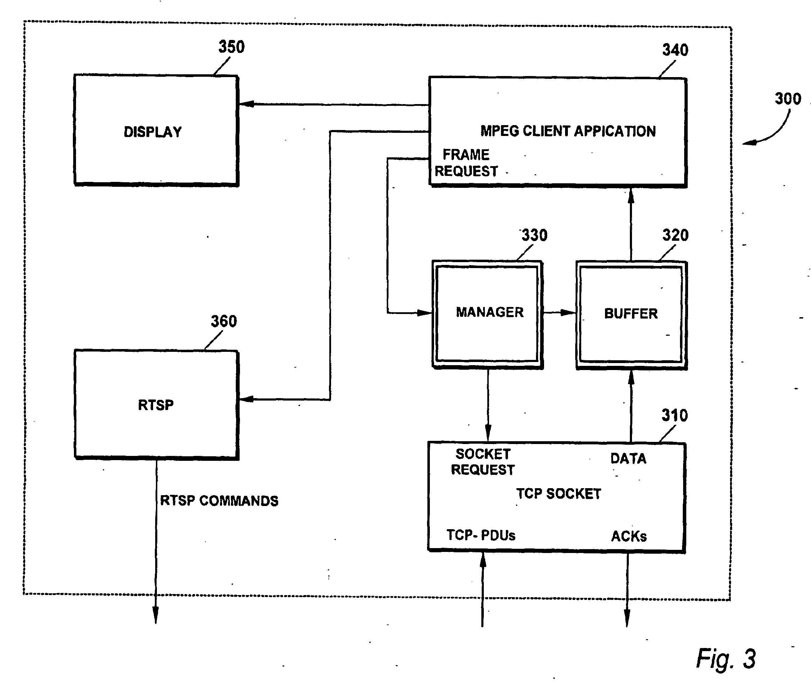

The basic architecture of a TCP streaming client 300 is illustrated in Figure 3. The client 330 typically consists of a TCP socket 310, an application layer buffer 320, a buffer manager 330 for the application layer buffer and a display 350 for visualization purposes.

The client 300 processes the data segments of variable length as they come. In response thereto, it sends ACKs and performs flow control in order to prevent an overflow of the TCP socket 310 while extracting the maximum bit rate possible from the link. To do this, the TCP socket indicates to the server, with each ACK, how much data it can receive until the socket is full using a window field in the header of the TCP ACK messages. If needed, the TCP client signals a zero-window telling the server to enter the "Persist" mode wherein no data is sent until the client allows to do so. Meanwhile the connection is maintained. The Persist mode and the signaling of a window field are standard functionalities of the TCP protocol. When the TCP socket has capacity for more data, it signals this to the server. Streaming control commands are signalled to the server by means of RTSP commands. In this manner, the frequency of sending rate reduction events can be decreased, and the delay and packet losses involved in abrupt connection teardowns are avoided.

The application layer buffer 320, also called "play-out buffer" receives data from the socket and transmits same to the MPEG client application 340. The manager 330 for the application layer buffer 320 receives a frame request from the MPEG client application and issues a socket request upon considering the state of the application layer buffer. The buffer manager 320 therefore insures that the bit rate with which the TCP socket 310 can deliver the new data to the application layer buffer 320 matches the bit rate at which the application layer buffer is emptied to the MPEG client application 340.

The buffer manager 330 is the one in charge of monitoring the fill-up status of the buffer. The TCP client socket 310 delivers its data to the buffer as long as there is capacity.

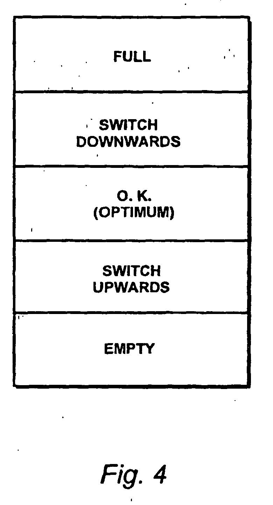

Let's now assume a loss-free (no bit-error losses) and finite bandwidth link. In the initial state the buffer occupancy has an optimum value, the buffer is in "OK" state, say between the maximum and minimum occupancy thresholds. At every given instant the manager 330 may observe one of the four different buffer states as illustrated in Figure 4.
- "Full": some maximum occupancy threshold (Max. Fill-up_Level + Receiver_Socket_Size <= Maximum Buffer Size) is surpassed or what's equivalent: the buffer manager is not able to accept the data from the TCP socket as fast as the socket is currently able to deliver, because the client application display rate is smaller than the available link bandwidth. This causes the TCP client to progressively decrease the advertised window until a zero-window is sent. Upon this, the server application enters the "Persist" Mode.
   In case multi-rate content is available at the server, the buffer manager additionally instructs the TCP server, via RTSP or another used stream control protocol, to send another stream with higher encoding rate. If not, the solution would be to limit the display rate, by just limiting the rate of the data that comes from the TCP socket.
- "Empty": some minimum occupancy threshold is not reached. This means that the buffer manager consumes the data in the buffer faster that the TCP socket can deliver it.
   If multi-rate content is available the solution is, via RTSP, to stop taking data from the current encoding rate and play from another stream encoded at a lower bit rate. If not, the solution is to stop the transmission, if the user desires.
- "Incipient Switch Downwards (Upwards)": these thresholds are placed between both "Full" and "Empty" thresholds. The fill-up rate of the buffer decreases (or increases), the buffer empties (or fills up) slowly. Action for the client to take: signal the server to initiate adequate actions to be prepared for a possible stream switch event.
- "OK": the buffer occupancy is optimum. It stays within the two "Incipient Switch Downwards (Upwards)" thresholds because both available bandwidth and display rate match.

This scheme can be easily generalized to the case of packet losses. The difference between "OK" and "Full (Empty)" fill-up levels shall account for TCP's instantaneous throughput variations. While the difference between the "Incipient Switch Downwards (Upwards)" and "Full (Empty)" fill-up levels shall avoid false switch decisions.

The above-described mechanism allows the client application to control and, if required, limit the sending rate of a server stream application. The protocol used by both applications is TCP, which includes flow and congestion control algorithms to avoid buffer overflow and is able to react appropriately in case of congestion. The described buffer monitoring operation is specifically useful when streaming real-time multimedia data over the TCP protocol and when the server is provided with multi-rate content that is the same multimedia content at different encoding rates. This scheme allows loss-free or near-loss-free switching between streams.

The above-described mechanism allows a client-driven sending rate limitation and/or rate adaption in case that multi-rate content is available to the server application.

## Claims

1. A method of transmitting data streams between a sending host and a receiving host using a transport protocol, comprising the steps of:
signaling stream control data to the sending host
making data streams available at the sending host in form of multi-rate streams of identical content for transmission to the receiving host; and
signaling stream control data to the sending host to switch from one data stream to another data stream having the same content but a different encoding rate,
**characterized by** the following steps:
monitoring the occupancy state of a client application layer buffer of the receiving host; and
performing the switch operation depending on the monitored state of the application layer buffer.

2. The method according to claim 1, wherein the stream control data commands the sending host to limit or change the encoding rate of the data stream.

3. The method according to one of claims 1-2, wherein the step of monitoring the occupancy state of the application layer buffer comprises comparing the bit rate at which the receiving host delivers new data to the application layer buffer with the rate with which data is requested by the application.

4. The method according to one of claims 1-3, wherein the step of monitoring the occupancy state of the application layer buffer comprises the step of comparing the actual occupancy state against a plurality of occupancy thresholds.

5. The method according to one of claims 1-4, wherein the data streams are real-time multimedia data.

6. The method according to one of claims 1-5, wherein the transport protocol is TCP which includes a flow and congestion control algorithm which probes the communication link between the sending host and the receiving host for the available bandwidth.

7. The method according to one of claims 1-6, wherein the data streams are temporarily stored in an internal buffer at the receiving host.

8. The method according to one of claims 1-7, wherein the stream control data is in accordance with the RTSP protocol.

## Patentansprüche

1. Verfahren zum Übertragen von Datenströmen zwischen einem sendenden Host und einem empfangenden Host unter Verwendung eines Transportprotokolls, das die folgenden Schritte umfasst:
Signalisieren von Strom-Steuerdaten an den sendenden Host,
Bereistellen von Datenströmen an dem sendenden Host in Form von Vielfachraten-Strömen identischen Inhalts zum Senden zu dem empfangenden Host; und
Signalisieren von Strom-Steuerdaten an den sendenden Host, um von einem Datenstrom zu einem anderen Datenstrom zu wechseln, der den gleichen Inhalt, jedoch eine andere Kodierrate hat,
**gekennzeichnet durch** die folgenden Schritte:
Überwachen des Belegungszustandes eines Client-Anwendungsschicht-Puffers des empfangenden Hosts; und
Durchführen des Wechselvorgangs in Abhängigkeit von dem überwachten Zustand des Anwendungsschicht-Puffers.

2. Verfahren nach Anspruch 1, wobei die Strom-Steuerdaten den sendenden Host anweisen, die Kodierrate des Datenstroms zu begrenzen oder zu ändern.

3. Verfahren nach einem der Ansprüche 1-2, wobei der Schritt des Überwachens des Belegungszustandes des Anwendungsschicht-Puffers das Vergleichen der Bit-Rate, mit der der empfangenden Host dem Anwendungsschicht-Puffer neue Daten liefert, mit der Rate umfasst, mit der Daten von der Anwendung angefordert werden.

4. Verfahren nach einem der Ansprüche 1-3, wobei der Schritt des Überwachens des Belegungszustandes des Anwendungsschicht-Puffers den Schritt des Vergleichens des tatsächlichen Belegungszustandes mit einer Vielzahl von Belegungs-Schwellenwerten umfasst.

5. Verfahren nach einem der Ansprüche 1-4, wobei die Datenströme Echtzeit-Multimediadaten sind.

6. Verfahren nach einem der Ansprüche 1-5, wobei das Transportprotokoll TCP ist, das einen Strom- und Überlast-Kontroll-Algorithmus enthält, der die Kommunikationsverbindung zwischen dem sendenden Host und dem empfangenden Host auf die verfügbare Bandbreite prüft.

7. Verfahren nach einem der Ansprüche 1-6, wobei die Datenströme temporär in einem internen Puffer an dem empfangenden Host gespeichert werden.

8. Verfahren nach einem der Ansprüche 1-7, wobei die Strom-Steuerdaten dem RTSP-Protokoll entsprechen.

## Revendications

1. Procédé de transmission de trains de données en continu entre un hôte émetteur et un hôte récepteur utilisant un protocole de transport, comprenant les étapes consistant à :
signaler les données de contrôle de train continu à l'hôte émetteur
rendre les trains de données continus disponibles au niveau de l'émetteur sous la forme de trains à vitesse multiple du contenu identique pour la transmission à l'hôte récepteur ; et
signaler les données de contrôle de train continu à l'hôte émetteur pour commuter d'un train de données continu à un autre train de données en continu ayant le même contenu mais un taux de codage différent,
**caractérisé par** les étapes suivantes :
surveiller l'état d'occupation de la mémoire tampon de la couche d'application client de l'hôte récepteur, et
effectuer l'opération de commutation en fonction de l'état surveillé de la mémoire tampon de couche d'application.

2. Procédé selon la revendication 1, dans lequel les données de contrôle de train continu ordonnent à l'hôte émetteur de limiter ou de changer le taux de codage du train de données en continu.

3. Procédé selon l'une quelconque des revendications 1 à 2, dans lequel l'étape de surveillance de l'état d'occupation de la mémoire tampon de couche d'application comprend la comparaison du débit binaire auquel l'hôte récepteur délivre de nouvelles données à la mémoire tampon de couche d'application au débit auquel les données sont demandées par l'application.

4. Procédé selon l'une quelconque des revendications 1 à 3, dans lequel l'étape de surveillance de l'état d'occupation de la mémoire tampon de couche d'application comprend l'étape consistant à comparer l'état d'occupation réel par rapport à une pluralité de seuils d'occupation.

5. Procédé selon l'une quelconque des revendications 1 à 4, dans lequel les trains de données en continu sont des données multimédia en temps réel.

6. Procédé selon l'une quelconque des revendications 1 à 5, dans lequel le protocole de transport est TCP qui inclut un algorithme de contrôle de flux et d'encombrement qui sonde la liaison de communication entre l'hôte émetteur et l'hôte récepteur pour la largeur de bande disponible.

7. Procédé selon l'une quelconque des revendications 1 à 6, dans lequel les trains de données en continu sont mémorisés temporairement dans une mémoire tampon interne au niveau de l'hôte récepteur.

8. Procédé selon l'une quelconque des revendications 1 à 7, dans lequel les données de contrôle de train continu sont en conformité avec le protocole RTSP.
